# EUROPEAN PATENT SPECIFICATION

(11) **EP 1 856 466 B1**
(45) Date of publication and mention of the grant of the patent: **27.09.2017**
(21) Application number: 06711050.2
(22) Date of filing: 08.03.2006
(51) Int. Cl.: F25D 29/00

(54) **A COOLING DEVICE**
KÜHLVORRICHTUNG
DISPOSITIF REFROIDISSEUR

(30) Priority: 09.03.2005 TR 200500838
(43) Date of publication of application: 21.11.2007
(73) Proprietor: Arçelik Anonim Sirketi, 34950 Istanbul (TR)
(72) Inventor: ERCAN, Turgay Arcelik Anonim Sirketi, Tuzla, 34950 Istanbul (TR)
(86) International application number: PCT/IB2006/050725
(87) International publication number: WO 2006/095318

(56) References cited:
- US-A- 1 886 042
- US-A1- 2004 028 118
- PATENT ABSTRACTS OF JAPAN vol. 1996, no. 08, 30 August 1996 (1996-08-30) -& JP 08 100994 A (SANYO ELECTRIC CO LTD), 16 April 1996 (1996-04-16)
- PATENT ABSTRACTS OF JAPAN vol. 2000, no. 21, 3 August 2001 (2001-08-03) -& JP 2001 091116 A (FUJITSU GENERAL LTD), 6 April 2001 (2001-04-06)
- PATENT ABSTRACTS OF JAPAN vol. 1996, no. 06, 28 June 1996 (1996-06-28) -& JP 08 035766 A (SANYO ELECTRIC CO LTD), 6 February 1996 (1996-02-06)
- PATENT ABSTRACTS OF JAPAN vol. 2003, no. 12, 5 December 2003 (2003-12-05) -& JP 2004 061067 A (MITSUBISHI MATERIALS CORP; MMC ELECTRONICS MALAYSIA SDN BHD), 26 February 2004 (2004-02-26)
- PATENT ABSTRACTS OF JAPAN vol. 2000, no. 05, 14 September 2000 (2000-09-14) -& JP 2000 055541 A (MITSUI MINING &SMELTING CO LTD), 25 February 2000 (2000-02-25)
- PATENT ABSTRACTS OF JAPAN vol. 1998, no. 11, 30 September 1998 (1998-09-30) -& JP 10 153491 A (FUJI ELECTRIC CO LTD), 9 June 1998 (1998-06-09)
- PATENT ABSTRACTS OF JAPAN vol. 1997, no. 08, 29 August 1997 (1997-08-29) -& JP 09 096567 A (OOIZUMI SEISAKUSHO:KK), 8 April 1997 (1997-04-08)
- PATENT ABSTRACTS OF JAPAN vol. 1995, no. 09, 31 October 1995 (1995-10-31) -& JP 07 146041 A (TOSHIBA CORP), 6 June 1995 (1995-06-06)
- PATENT ABSTRACTS OF JAPAN vol. 002, no. 042 (E-023), 20 March 1978 (1978-03-20) -& JP 53 006084 A (HITACHI LTD), 20 January 1978 (1978-01-20)

## Description

This invention relates to a cooling device comprising a holder whereby the temperature sensor is attached onto the evaporator.

In state-of-the-art cooling devices, the evaporator temperature is measured by means of a temperature sensor positioned on the said evaporator. Sensor is attached to the evaporator by means of holders. The way the sensor is attached is one of the important factors affecting the correctness of the measurement, the time period of the operation of the compressor and thus the overall efficiency of the cooling device.

In the British Patent Document GB 697502, a description is given of a sensor which is positioned into a housing and is pushed towards the surface of the evaporator by a leaf spring placed inside the mentioned housing.

In the Japanese Patent Document JP 9189469, a holder having an S - shape is disclosed, wherein the evaporator inlet pipe is connected to one side of the said holder and the sensor is attached to the other side.

In the European Patent Document EP 1128143, a description is given of a holder which consists of two pieces that close on each other like the pages of a book and wherein the sensor is positioned between the said pieces and the holder is attached to the evaporator by means of brackets placed on one of the said pieces.

In the German Patent Document DE 1751713, a description is given of a holder in the form of a horizontal H and fitted to the evaporator plate from the housings positioned at both sides.

In the European Patent Document EP 190793, a description is given of a holder comprising a U-formed channel where the sensor is located and flaps whereby it is attached to the evaporator. The mentioned holder is manufactured from plastics.

Japanese Patent Document JP08100994 discloses a temperature sensor that is attached to refrigerant pipes of a heat exchanger by a thermoconductive sensor fixing element. Said sensor fixing element is comprised of a holding part for holding the sensor at one surface and abutting against a refrigerant pipe, and two engaging parts which are continuous with respective ends of the holding part and engaged with a refrigerant pipe and a corner part of the cooling device, respectively.

Japanese Patent Document JP 2001 091116 discloses a fitting device for attaching a thermistor to a U-tube of a heat exchanger. The fitting device comprises sections rolled to cylinder form for taking up the thermistor and for attachment to the U-tubes, respectively.

Some of the holders disclosed in the state-of-the-art applications are not in a form to clamp the sensor and the evaporator secure enough. Additionally, since the contact surface between the sensor and the evaporator is inadequate, temperature may be measured wrongly.

Furthermore, once they are manufactured, the state-of-the-art sensor holders can only be utilized to hold sensors of a certain type and size. In order to be able to hold various sensors, it is necessary to manufacture different types of sensors with different sizes. Particularly, during the maintenance of the cooling device, if the sensor is to be changed, it is not possible to use a sensor which does not match the existing sensor holder.

In addition to the aforementioned problems, state-of-the-art sensor holders take up a considerable amount of space during transportation and storage.

The aim of the present invention is the realization of a cooling device comprising a sensor holder easy to manufacture and assemble, taking up less space during transportation and storage, and can be utilized with various types of sensors and evaporators at different sizes, providing the sensor to be attached more securely.

The cooling device designed to fulfill the objectives of the present invention is illustrated in the annexed drawings where:
Figure 1 - is a side schematic representation of a cooling device.
Figure 2 - is a perspective view of the first embodiment of the sensor holder.
Figure 3 - is a perspective view of the first embodiment of the sensor holder, in open position.
Figure 4 - is a front view of the first embodiment of the sensor holder, where it is on the evaporator.
Figure 5 - is a side view of the first embodiment of the sensor holder, where it is on the evaporator.
Figure 6 - is a top view of the second embodiment of the sensor holder in open position.
Figure 7 - is a perspective view of the second embodiment of the sensor holder.
Figure 8 - is a top view of the third embodiment of the sensor holder in open position.
Figure 9 - is a perspective view of the third embodiment of the sensor holder.
Figure 10 - is a top view of the fourth embodiment of the sensor holder in open position.
Figure 11 - is a perspective view of the fourth embodiment of the sensor holder.
Figure 12 - is a top view of the fifth embodiment of the sensor holder in open position.
Figure 13 - is a perspective view of the fifth embodiment of the sensor holder.
Figure 14 - is a top view of the sixth embodiment of the sensor holder in open position.
Figure 15 - is a perspective view of the sixth embodiment of the sensor holder.

Elements shown in figures are numbered as follows:
1. Cooling device
2. Heat exchanger
3. Sensor
4. Sensor holder
5. Flap
6. Flange
7. Body
8. Housing

The cooling device (1) in accordance with the present invention, comprises at least one heat exchanger (2) whereby heat is transferred from the environment to the refrigerant fluid, at least one sensor (3) which is used to measure the surface temperature of the said heat exchanger (2) and a sensor holder (4) whereby said sensor (3) is attached onto the heat exchanger (2).

The heat exchanger (2) may be either an evaporator or a condenser.

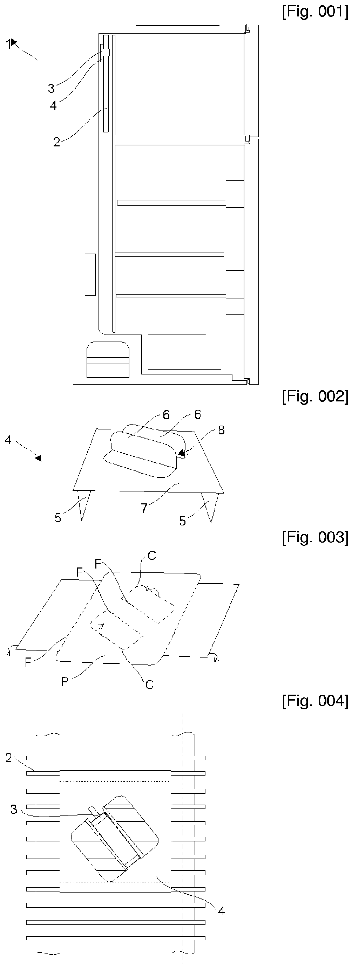

The sensor holder (4) comprises a body (7) made of a sheet material (P) with a proper contour, whereby heat transfer is achieved as it contacts with the heat exchanger (2), at least one flap (5) which is formed by cutting the said sheet material (P) along certain cutting lines (C) and folding along certain folding lines (F), such that it extends at a certain angle with respect to the body (7) and squeezes and clamps the heat exchanger (2) as it is folded, and, at least one flange (6) which is formed by cutting the said sheet material (P) along certain cutting lines (C) and folding it along certain folding lines (F) such that it extends at a certain angle with respect to the body (7) and, squeezes and clamps the sensor (3) as it is folded (Fig. 1 and Fig. 2).

The sensor holder (4) is manufactured from a sheet material (P) which has such a heat conductivity that the heat of the heat exchanger (2) is transferred to the sensor (3), which is ductile enough to be cut and folded, and which is so rigid to squeeze and clamp the sensor (3) or the heat exchanger (2). In the preferred embodiment of the present invention, a metal especially aluminum is utilized.

By contacting the heat exchanger (2) at one side, the body (7) forms the heat transfer surface.

By surrounding the rear side of the heat exchanger (2) and thus by squeezing the heat exchanger (2), the flap (5) enables the sensor holder (4) to securely clamp the aforementioned heat exchanger (2). By means of the flap (5), the heat transfer area between the heat exchanger (2) and the sensor (3) is enlarged. Thanks to the ductility of the material which the sensor holder (4) is manufactured from, by opening the flap (5) backwards, the sensor holder (4) may be detached from the heat exchanger (2) and attached back if necessary.

The sensor holder (4) incorporates a housing (8) which is positioned either between the flange (6) and the body (7) or between the heat exchanger (2) and the flange (6), and inside which the sensor (3) is placed. By forcing the flange (6) after placing the sensor (3) into the housing (8), it is achieved that the sensor (3) is tightly clamped and thereby that the heat is transferred to the sensor (3) in a more effective manner, wherein the flange (6) may also be opened to detach the sensor (3).

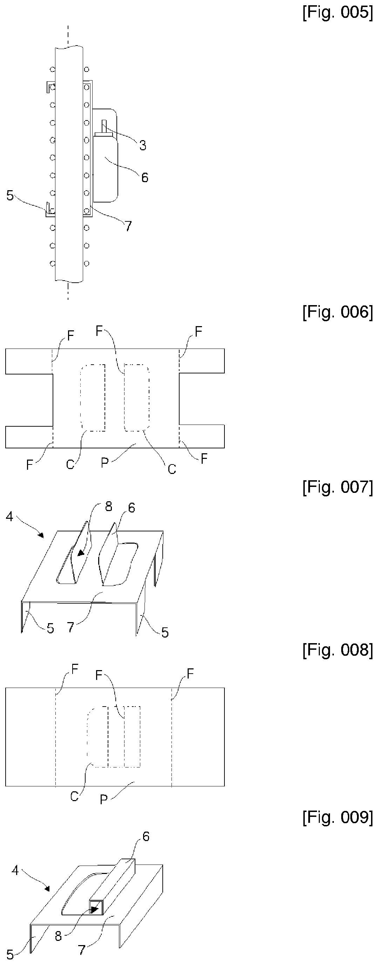

Depending on the properties of the sensor (3) and the heat exchanger (2), the contour of the plate (P) from which the sensor holder is manufactured may be in various forms such as a triangle, a quadrangle (Fig. 8, Fig. 10, Fig. 12, Fig. 14), a polygon, a circle, an H (Fig. 6), a T (Fig. 3), and a +, etc.

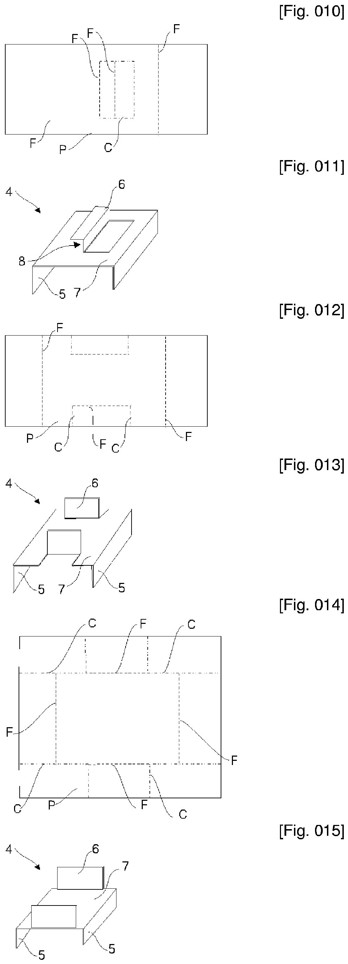

The cutting line (C) is in the shape of an open curve the two ends of which do not conjoin. The cutting line (C)
- may be positioned completely inside the plate (P) (Fig. 3, Fig. 6, Fig. 8, Fig. 10);
- may start from one edge of the plate (P) and finish at another point inside the plate (P) (Fig. 12); or
- may start from one edge and finish at another edge of the plate (P) (Fig. 14).

The cutting line (C) may be in any form such as U, W, E, C or V.

The folding line (F) is in form of a line segment which,
- starts at a point on an edge of the plate (P) and finishes at another point on the edge (Fig. 13),
- starts and finishes at two ends of a cutting line (C) (Fig. 3, Fig. 6) or,
- starts and finishes at two points on two different cutting lines (C) (Fig. 6, Fig. 8, Fig. 10).

In the preferred embodiment of the present invention, the sensor holder (4) incorporates two flaps (5) which are formed by folding a plate (P) having a quadrangular contour, in a certain direction along two folding lines (F) parallel to two opposite sides of the said plate (P), a quadrangular body (7) positioned between the mentioned flaps (5) and, two flanges (6) which are formed as the body (7) is cut along two U-formed cutting lines (C) that are symmetric with respect to the diagonal of the said body (7) and is folded along two folding lines (F) that connect the two ends of the afore mentioned cutting lines (C) and are parallel to the diagonal of the body (7), in the opposite direction as the flaps (5) are folded and, where a housing (8) is formed in between, said housing (8) being used to position the sensor (3) (Fig. 2 and Fig. 3). Thereby, flaps (5) are positioned at one side of the body (7) whereas flanges (6) are positioned at the other side. When the sensor holder (4) is attached onto the heat exchanger (2), the flaps (5) are forced from behind the heat exchanger (2) while the flanges (6) are forced from the top of the sensor (3) towards the body (7). Thus, the flaps (5), the heat exchanger (2), the body (7), the sensor (3) and the flanges (6) are aligned on top of each other.

In the preferred embodiment of the present invention, the sensor holder (4) is attached onto a wire-on-tube type heat exchanger (2) (Fig. 4 and Fig. 5). The body (7) is in such a size that it covers the area between the two fluid pipes wherein said body (7) is fitted onto the heat exchanger (2) in such a manner that it touches both the mentioned pipes and the wires between these pipes. By having the flaps (5) passing through the apertures between the wires and being folded towards the heat exchanger (2) on the other side, the sensor holder (4) is attached to the mentioned heat exchanger (2). The sensor (3) is fitted to the housing (8) formed between the flanges (6) wherein said flanges (6) are bent towards each other so as to tightly clamp the mentioned sensor (3).

Since the sensor holder (4) utilized in the cooling device (1) in accordance with the recent invention may be stored and transported in plate (P) form without being folded, it takes up less space and thus it is achieved that the costs are reduced.

Once the sensor holder (4) according to the present invention is manufactured, it may be utilized for attaching different sizes of sensors (3) to heat exchangers (2) with housings (8) having various sizes. While producing various types of cooling devices (1), the aforementioned feature brings great ease to the manufacturer. Particularly during the maintenance of the cooling device (1), if the sensor (3) has to be replaced, the old sensor (3) may be demounted whereas another sensor (3) is easily attached to its position. Moreover, besides the body (7) of the sensor holder (4), the flaps (5) and flanges (6) also contribute to the heat transfer.

The cooling device (1), in accordance with the present invention, brings considerable advantages by means of its sensor holder (4) whereby the sensor (3) is attached more securely and which is easy to manufacture and assemble and may be used with various types and sizes of sensors (3) and heat exchangers (2).

## Claims

1. A cooling device (1) comprising:
at least one heat exchanger (2) whereby heat is transferred from the environment to the refrigerant fluid and;
at least one sensor (3) which is used to measure the surface temperature of the mentioned heat exchanger (2);
a sensor holder (4) which is manufactured from a sheet material (P) with a proper contour, which is ductile enough to be cut and folded and which is so rigid to squeeze and clamp the sensor (3) or the heat exchanger (2) and comprising:
a body (7) whereby heat transfer is achieved as it touches the heat exchanger (2);
at least one flap (5) which is formed by cutting the said sheet material (P) along certain cutting lines (C) and folding it along certain folding lines (F), such that it extends at a certain angle with respect to the body (7) and squeezes and clamps the heat exchanger (2) as it is folded, and
at least one flange (6) which is formed by cutting the said sheet material (P) along certain cutting lines (C) and folding it along certain folding lines (F), such that it extends at a certain angle with respect to the body (7) and thus squeezes and clamps the sensor (3) as it is folded;
**characterized in that** the sensor holder (4) is manufactured from a plate (P) that is cut along a cutting line (C) which is in shape of an open curve two ends of which do not conjoin, wherein the cutting line (C) is positioned completely inside the plate (P).

2. A cooling device (1) according to Claim 1, **characterized in that** the sensor holder (4) comprises a housing (8) into which the sensor (3) is placed, positioned either between the flange (6) and the body (7) or between the heat exchanger (2) and the flange (6).

3. A cooling device (1) according to Claim 1, **characterized in that** the sensor holder (4) is manufactured from a plate (P) that is cut along a cutting line (C) which starts from one edge of the plate (P) and finishes at another point inside the plate (P).

4. A cooling device (1) according to Claim 1, **characterized in that** the sensor holder (4) is manufactured from a plate (P) that is cut along a cutting line (C) which starts from one edge and finishes at another edge of the plate (P).

5. A cooling device (1) according to any one of the preceding Claims, **characterized by** a sensor holder (4) manufactured from a plate (P) that is folded along a folding line (F) in form of a line segment which starts at a point on the edge of the plate (P) and finishes at another point on the edge.

6. A cooling device (1) according to any one of Claims 1 through 4, **characterized in that** the sensor holder (4) is manufactured from a plate (P) that is folded along a folding line (F) which connects the two ends of a cutting line (C).

7. A cooling device (1) according to any one of Claims 1 through 4, **characterized in that** the sensor holder (4) is manufactured from a plate (P) that is folded along a folding line (F) which connects two points on two different cutting lines (C).

8. A cooling device (2) according to Claims 1 or 2, **characterized by** a sensor holder (4) wherein the flaps (5) are positioned on one side of the body (7) and the flanges (6) are positioned on the other side and wherein, when said sensor holder (4) is attached onto the heat exchanger (2), the flaps (5) are squeezed from behind the heat exchanger (2) towards the body (7) whereas the flanges (6) are squeezed from the top of the sensor (3).

## Patentansprüche

1. Ein Kühlgerät (1) bestehend aus:
mindestens einem Wärmetauscher (2), wobei die Wärme von der Umgebung zur Kühlmittelflüssigkeit übertragen ist und;
mindestens einem Sensor (3), der verwendet ist, um die Oberflächentemperatur des besagten Wärmetauschers (2) zu bemessen;
einem Sensorhalter (4), der hergestellt ist von einem Plattenmaterial (P) mit einer angemessenen Kontur, die genügend dehnbar für Schneiden und Falten und starr für Auspressen ist und den Sensor (3) oder Wärmetauscher (2) festklammert und besteht aus:
einem Körper (7), wobei Wärmeübertragung bestanden ist, wenn er den Wärmetauscher (2) berührt;
mindestens einer Klappe (5), die geformt ist durch Schneiden des besagten Plattenmaterials (P) entlang bestimmter Schneidelinien (C) und durch Falten es entlang bestimmter Faltlinien (F), sodaß es sich ausstreckt an einem bestimmten Winkel hinsichtlich dem Körper (7) und den Wärmetauscher (2) auspresst und festklemmt, als es gefaltet ist, und
mindestens einem Flansch (6), der geformt ist durch Schneiden des besagten Plattenmaterials (P) entlang bestimmter Schneidelinien (C) und durch Falten es entlang bestimmter Faltlinien (F), sodaß es sich ausstreckt an einem bestimmten Winkel hinsichtlich dem Körper (7) und auf diese Art und Weise den Sensor (3) auspresst und festklemmt, als es gefaltet ist;
**dadurch gekennzeichnet, daß** der Sensorhalter (4) hergestellt ist von einer Platte (P), die geschnitten wird entlang einer Schneidelinie (C), die die Form einer offenen Kurve hat, deren zwei Enden nicht verbunden sind, wobei die Schneidelinie (C) völlig in der Platte (P) hingelegt ist.

2. Ein Kühlgerät (1) nach Anspruch 1, **dadurch gekennzeichnet, daß** der Sensorhalter (4) beinhaltet ein Gehäuse (8), wohin der Sensor (3) eingesetzt wird, hingelegt entweder zwischen dem Flansch (6) und Körper (7) oder zwischen dem Wärmetauscher (2) und Flansch (6).

3. Ein Kühlgerät (1) nach Anspruch 1, **dadurch gekennzeichnet, daß** der Sensorhalter (4) hergestellt ist von einer Platte (P), die geschnitten ist entlang einer Schneidelinie (C), die anfängt von einer Seite der Platte (P) und endet an einem anderen Punkt im Innern der Platte (P).

4. Ein Kühlgerät (1) nach Anspruch 1, **dadurch gekennzeichnet, daß** der Sensorhalter (4) hergestellt ist von einer Platte (P), die geschnitten ist entlang einer Schneidelinie (C), die anfängt von einer Seite und endet an einer anderen Seite der Platte (P).

5. Ein Kühlgerät (1) nach den vorhergehenden Ansprüchen, **gekennzeichnet von** einem Sensorhalter (4), der von einer Platte (P) hergestellt ist, die gefaltet ist entlang der Faltlinie (F) in Form eines Liniensegments, das anfängt an einem Punkt auf der Seite der Platte (P) und endet an einem anderen Punkt auf der Seite.

6. Ein Kühlgerät (1) nach Ansprüchen 1 bis 4, **dadurch gekennzeichnet, daß** der Sensorhalter (4) hergestellt ist von einer Platte (P), die entlang einer Faltlinie (F) gefaltet ist, die zwei Enden einer Schneidelinie (C) verbindet.

7. Ein Kühlgerät (1) nach Ansprüchen 1 bis 4, **dadurch gekennzeichnet, daß** der Sensorhalter (4) hergestellt ist von einer Platte (P), die entlang einer Faltlinie (F) gefaltet ist, die zwei Punkte auf zwei verschiedenen Schneidelinien (C) verbindet.

8. Ein Kühlgerät (2) nach Ansprüchen 1 oder 2, **dadurch gekennzeichnet, daß** in einem Sensorhalter (4) die Klappen (5) hingelegt sind auf einer Seite des Körpers (7) und die Flanschen (6) hingelegt sind auf der anderen Seite und wobei der besagte Sensorhalter (4) befestigt ist auf den Wärmetauscher (2), die Klappen (5) sind ausgepresst von hinter dem Wärmetauscher (2) zum Körper (7), wobei die Flanschen (6) ausgepresst sind vom Kopf des Sensors (3).

## Revendications

1. Un dispositif de refroidissement (1) comprenant:
Au moins un échangeur de chaleur (2), selon lequel la chaleur est transférée de l'environnement au fluide frigorigène et;
Au moins un capteur (3) qui est utilisé pour mesurer la température de surface de l'échangeur de chaleur mentionné (2);
un support de capteur (4) qui est fabriqué à partir d'un matériau en feuille (P) avec un contour approprié, qui est suffisamment ductile pour être dé coupé et plié et qui est si rigide pour presser et serrer le capteur (3) ou l'échangeur de chaleur (2) et comprenant:
un corps (7) par lequel le transfert de chaleur est réalisé lors qu'il touche l'échangeur de chaleur (2);
au moins un rabat (5) qui est formé en découpant ledit matériau en feuille (P) le long de certaines lignes de coupe (C) et en le pliant selon certaines lignes de pliage (F), de sorte qu'il s'étend à un certain angle par rapport au corps (7) et presse et serre l'échangeur de chaleur (2) lorsqu'il est plié, et
au moins une bride (6) qui est formée en découpant ledit matériau en feuille (P) le long de certaines lignes de coupe (C) et en le pliant selon certaines lignes de pliage (F), de sorte qu'il s'étend à un certain angle par rapport au corps (7) et donc presse et serre le capteur (3) lorsqu'il est plié;
**caractérisé en ce que** le support de capteur (4) est fabriqué à partir d'une plaque (P) qui est découpée le long d'une ligne de coupe (C) qui est en forme de courbe ouverte dont les deux extrémités ne se conjuguent pas, dans lequel la ligne de coupe (C) est complètement placée dans la plaque (P).

2. Un dispositif de refroidissement (1) selon la revendication 1, **caractérisé en ce que** le support de capteur (4) comprend un boîtier (8) dans lequel est placé le capteur (3), positionné soit entre la bride (6) et le corps (7) ou entre l'échangeur de chaleur (2) et la bride (6).

3. Un dispositif de refroidissement (1) selon la revendication 1, **caractérisé en ce que** le support de capteur (4) est fabriqué à partir d'une plaque (P) qui est découpée le long d'une ligne de coupe (C) qui part d'un bord de la plaque (P) et se termine à un autre point à l'intérieur de la plaque (P).

4. Un dispositif de refroidissement (1) selon la revendication 1, **caractérisé en ce que** le support de capteur (4) est fabriqué à partir d'une plaque (P) qui est découpée le long d'une ligne de coupe (C) qui part d'un bord et qui se termine à un autre bord de la plaque (P).

5. Un dispositif de refroidissement (1) selon l'une quelconque des revendications précédentes, **caractérisé par** un support de capteur (4) fabriqué à partir d'une plaque (P) qui est pliée le long d'une ligne de pliage (F) sous la forme d'un segment de ligne qui commence à un point sur le bord de la plaque (P) et se termine à un autre point sur le bord.

6. Un dispositif de refroidissement (1) selon l'une quelconque des revendications 1 à 4, **caractérisé en ce que** le support de capteur (4) est fabriqué à partir d'une plaque (P) qui est pliée le long d'une ligne de pliage (F) qui relie les deux extrémités d'une ligne de coupe (C).

7. Un dispositif de refroidissement (1) selon l'une quelconque des revendications 1 à 4, **caractérisé en ce que** le support de capteur (4) est fabriqué à partir d'une plaque (P) qui est pliée le long d'une ligne de pliage (F) qui relie les deux points sur deux différents lignes de coupe (C).

8. Un dispositif de refroidissement (2) selon les revendications 1 ou 2, **caractérisé par** un support de capteur (4) dans lequel les rabats (5) sont positionnés sur un côté du corps (7) et les brides (6) sont positionnées de l'autre côté et dans le quel, lors que ledit support de capteur (4) est fixé sur l'échangeur de chaleur (2), les rabats (5) sont pressés de l'derrière de l'échangeur de chaleur (2) vers le corps (7) alors que les brides (6) sont pressées du sommet du capteur (3).
